# EUROPEAN PATENT APPLICATION

(11) **EP 1 839 969 A2**
(43) Date of publication of application: **03.10.2007**
(21) Application number: 07005986.0
(22) Date of filing: 23.03.2007
(51) Int. Cl.: B60S 1/08

(54) **Rain sensor**

(30) Priority: 31.03.2006 JP 2006096741
(71) Applicant: NILES CO., LTD., Tokyo 143-8521 (JP)
(72) Inventor: Izumi, Masato, Tokyo 143-8521 (JP)
(74) Representative: Luderschmidt, Schüler & Partner

(57) **Abstract**

In the rain sensor (1), the prism (5) includes the first and the second lens surfaces (19,21) at the light-emitting side and the light-receiving side on optical axes each differently directed. The prism (5) also includes a first reflection wall (27) which reflects the light injecting the first lens surface (19) at the light-emitting side toward the first detection surfaces (33,37) of the windshield panel (11), and a second reflection wall (29) which reflects the light injecting from the second lens surface (21) at the light-emitting side to be reflected on second detection surfaces (35,39) of the windshield panel (11) toward the second lens surface (25) at the light-receiving side. The light reflected on the first detection surface (33,37) is condensed to inject the light-receiving element (9) from the first lens surfaces (23), and the light reflected on the second detection surfaces (35,39) is condensed to inject the light-receiving element (9) from the second lens surface (25) through reflection on the second reflection wall (29).

## Description

### Technical Field

The present invention relates to a rain sensor used for a vehicle.

### Background Art

Generally, a rain sensor is required to expand its raindrop detection region while reducing its size.

The art in which the prism is contrived to allow the light-emitting element and the light-receiving element to be arranged in the area between the lens surfaces of the prism at the light-emitting side and the light-receiving side has been proposed to satisfy the aforementioned requirement.
The above-described structure has achieved the expansion of the raindrop detection region while reducing the structure size to a certain degree.

However, it is limited for the single raindrop detection region to be further expanded while reducing the structure size.

[Patent Document 1] Japanese Unexamined Patent Application Publication No. 2002-296363

### SUMMARY OF THE INVENTION

It is an object of the present invention to provide the rain sensor which expands the raindrop detection region while being kept compact.

In order to further expand the raindrop detection region while being kept compact, a rain sensor which includes a prism adhered onto an inner surface of a windshield panel, having lens surfaces at a light-emitting side and a light-receiving side, a light-emitting element which emits light to the lens surface at the light-emitting side, and a light-receiving element which receives the light from the lens surface at the light-receiving side is provided with a first reflection wall including first and second lens surfaces on optical axes each differently directed at the light-emitting side and the light-receiving side to reflect the light injecting the first lens surface at the light-emitting side toward a first detection surface of the windshield panel, and a second reflection wall which reflects the light injecting from the second lens surface at the light-emitting side to be reflected on a second detection surface on the windshield panel toward the second lens surface at the light-receiving side. The light reflected on the first detection surface is condensed to inject the light-receiving element from the first lens surface at the light-receiving side, and the light reflected on the second detection surface is condensed to inject the light-receiving element from the second lens surface at the light-receiving side through reflection on the second reflection wall.

According to the present invention, a rain sensor which includes a prism adhered onto an inner surface of a windshield panel, having lens surfaces at a light-emitting side and a light-receiving side, a light-emitting element which emits light to the lens surface at the light-emitting side, and a light-receiving element which receives the light from the lens surface at the light-receiving side is provided with a first reflection wall including first and second lens surfaces on optical axes each differently directed at the light-emitting side and the light-receiving side to reflect the light injecting the first lens surface at the light-emitting side toward a first detection surface of the windshield panel, and a second reflection wall which reflects the light injecting from the second lens surface at the light-emitting side to be reflected on a second detection surface on the windshield panel toward the second lens surface at the light-receiving side. The light reflected on the first detection surface is condensed to inject the light-receiving element from the first lens surface at the light-receiving side, and the light reflected on the second detection surface is condensed to inject the light-receiving element from the second lens surface at the light-receiving side through reflection on the second reflection wall. Accordingly a pair of the light-emitting element and the light-receiving element may be employed to form first and second detection surfaces such that the raindrop detection region is further expanded while being kept compact.

The first and the second lens surfaces at the light-emitting side and the light-receiving side, and the first and the second reflection walls are employed to satisfy the requirement to expand the raindrop detection region while keeping the sensor compact.

### BRIEF DESCRIPTION OF THE DRAWINGS

Fig. 1 is a sectional view schematically showing a rain sensor (Embodiment 1); and
Fig. 2 is a plan view schematically showing the rain sensor (Embodiment 1).

### Embodiment 1

### [Structure of rain sensor]

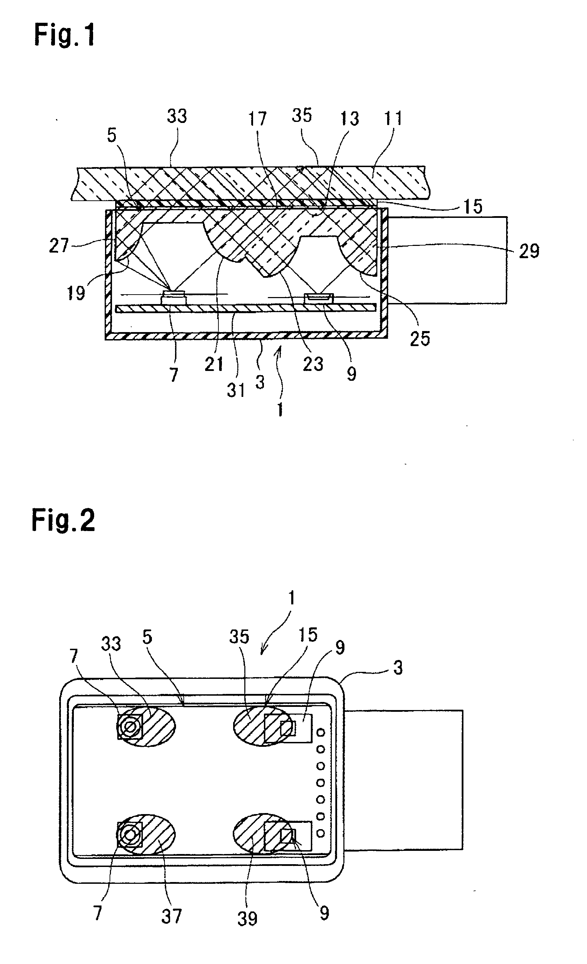

Figs. 1 and 2 show a rain sensor according to Embodiment 1 of the present invention, wherein Fig. 1 is a schematic sectional view, and Fig. 2 is a schematic plan view, respectively.

Referring to Figs. 1 and 2, a rain sensor 1 includes a prism 5, a light-emitting element 7 and a light-receiving element 9 in a housing 3.

The prism 5 is adhered to an inner surface (to the interior) of a windshield panel 11, for example, front windshield via a contact material 15, for example, silicon acrylic adhesive agent.

The prism 5 configured into a rectangular shape when viewed from the windshield panel 11 has one side on which a flat contact surface 17 is formed, and the other side on which first and second lens surfaces at the light-emitting side and the light-receiving side, that is, 19, 21, 23 and 25 are formed. The prism 5 further has first and second reflection walls 27 and 29.

The contact surface 17 is disposed opposite the inner surface 13 of the windshield panel 11 via the contact material 15. The aforementioned first and second lens surfaces at the light-emitting side and the light-receiving side, that is, 19, 21, 23 and 25 are arranged such that the first and the second lens surfaces 19 and 21 at the light-emitting side are formed on the optical axes having different directions, and the first and the second lens surfaces 23 and 25 at the light-receiving side are formed on the optical axes having different directions. Each of the first and the second lens surfaces 19, 21, 23 and 25 is formed into a convex surface. The first and the second lens surfaces 19 and 21 at the light-emitting side convert the incident light into the parallel light such that the first and the second lens surfaces 23, 25 at the light-receiving side condense the parallel light on the light-receiving element 9.

The first lens surface 19 at the light-emitting side and the second lens surface 25 at the light-receiving side are disposed in the area other than the space between the light-emitting element 7 and the light-receiving element 9. The second lens surface 21 at the light-emitting side and the first lens surface 23 at the light-receiving side are disposed in the area between the light-emitting element 7 and the light-receiving element 9.

The first and the second reflection walls 27 and 29 are formed on the flat surface. The first reflection wall 27 reflects the incident light on the first lens surface 19 at the light-emitting side to the windshield panel 11. On the optical axis of the first lens surface 19, the light is reflected at 45 directed toward the windshield panel 11. The second reflection wall 29 reflects the light which has injected from the second lens surface 21 at the light-emitting side and reflected on the windshield panel 11 toward the first lens surface 23 at the light-receiving side. The light from the windshield panel 11 is reflected at 45 on the optical axis of the second lens surface 25 at the light receiving side.

The light-emitting element 7 is formed of a light-emitting diode, and the light-receiving element 9 is formed of a photo diode or a photo transistor. The light-emitting element 7 is disposed between the first lens surface 19 and the second lens surface 21 at the light-emitting side. The light-receiving element 9 is disposed between the first lens surface 23 and the second lens surface 25 at the light-receiving side. The light-emitting element 7 and the light-receiving element 9 are formed on a circuit substrate 31, and connected to a not shown IC circuit formed of a semiconductor chip. The IC circuit allows the light-emitting element 7 to perform the light-emission and the light-receiving element 9 to perform the light-receiving output.

The embodiment employs two pairs formed by combining the light-emitting element 7 and the light-receiving element with the first and the second lens surfaces 19, 21, 23 and 25.

### [Detection surface]

When the IC circuit drives the light-emitting element 7 for light emission, the light is injected to the first and the second lens surfaces 19 and 21 at the light-emitting side, through which the aforementioned incident light is converted into the parallel light.

The light from the first lens surface 19 at the light-emitting side reaches the first reflection wall 27, and injects the first reflection wall 27 on the optical axis at the incident angle of 45. It is reflected to the windshield panel 11 at 45 to inject the contact material 15 from the prism 5. Then it proceeds to the windshield panel 11 from the inner surface 13 thereof while being kept as the parallel light.

The incident light on the windshield panel 11 is reflected on the outer surface 33, and proceeds through the contact material 15 while being kept as the parallel light to reach the first lens surface 23 at the light-receiving side of the prism 5.

The reflection light on the optical axis is refracted at the first lens surface 23 at the light-receiving side, and condensed to be injected to the light-receiving element 9 on the focus.

The light converted into the parallel light on the second lens surface 21 at the light-emitting side proceeds through the prism 5, the contact material 15, and the windshield panel 11, and is reflected on the outer surface 33 to reach the second reflection wall 29 of the prism 5 while proceeding through the contact material 15 as the parallel light. The light then injects the second reflection wall 29 on the optical axis at the incident angle of 45° , and is reflected at 45° toward the light-receiving element 9 to reach the second lens surface 25 at the light-receiving side.

The reflection light on the optical axis is refracted at the second lens surface 25 at the light-receiving side, and condensed to be injected to the light-receiving element 9 on the focus.

The series of injection and reflection of the light with respect to the windshield panel 11 may form the first to the fourth detection surfaces 33, 35, 37 and 39 as shown in Fig. 2 such that the raindrop adhered onto the windshield panel 11 is detected.

In the case where no raindrop is adhered onto the windshield panel 11, the light is reflected on all the regions, that is, the first to the fourth detection surfaces 33, 35, 37 and 39. Meanwhile, in the case where the raindrop adheres on any one of the first to the fourth detection surfaces 33, 35, 37 and 39, the light transmits the outer surface 33 through the raindrop. When the raindrop adheres on the windshield panel, the luminous energy of the light which reaches the light-receiving element 9 is reduced compared with the case of no raindrop adhesion. The raindrop may be detected based on the reduction of the luminous energy.

### [Effect of Example 1]

In the Example 1, a rain sensor 1 which includes a prism 5 adhered onto an inner surface 13 of a windshield panel 11, having lens surfaces 19, 21, 23 and 25 at a light-emitting side and a light-receiving side, a light-emitting element 7 which emits light to the lens surface 19 and 21 at the light-emitting side, and a light-receiving element 9 which receives the light from the lens surface 23 and 25 at the light-receiving side is provided with a first reflection wall 27 including first and second lens surfaces 19, 21, 23 and 25 on optical axes each differently directed at the light-emitting side and the light-receiving side to reflect the light injecting the first lens surface 19 at the light-emitting side toward first detection surfaces 33 and 37 of the windshield panel 11, and a second reflection wall 29 which reflects the light injecting from the second lens surface 21 at the light-emitting side to be reflected on second detection surfaces 35 and 39 on the windshield panel 11 toward the second lens surface 25 at the light-receiving side. The light reflected on the first detection surfaces 33 and 37 is condensed to inject the light-receiving element 9 from the first lens surface 23 at the light-receiving side, and the light reflected on the second detection surfaces 35 and 39 is condensed to inject the light-receiving element 9 from the second lens surface 25 at the light-receiving side through reflection on the second reflection wall 29. Two pairs of the light-emitting element 7 and the light-receiving element 9 may realize four first and the second detection surfaces 33, 35, 37 and 39 to increase the number of the raindrop detection regions. This makes it possible to further expand the raindrop detection region while keeping the structure compact.

Each convex surface of the first and the second lens surfaces 19, 21, 23 and 25, and each flat surface of the first and the second reflection walls 27 and 29 make it possible to configure the prism 5 into the simple shape.

The first lens surface 19 at the light-emitting side and the second lens surface 25 at the light-receiving side are disposed in the area other than the space between the light-emitting element 7 and the light-receiving element 9, and the second lens surface 21 at the light-emitting side and the first lens surface 23 at the light-receiving side are disposed in the area between the light-emitting element 7 and the light-receiving element 9. This may suppress the expansion of the interval of the arrangement of the prism 5, the light-emitting element 7 and the light-receiving element 9, thus making it sure and easy to further expand the raindrop detection region while keeping the structure compact.

### [Others]

The combination of the light-emitting element 7 and the light-receiving element 9 with the first and the second lens surfaces 19, 21, 23 and 25 is not limited to two pairs, but may be configured to one pair or three or more pairs.

## Claims

1. A rain sensor which includes a prism adhered onto an inner surface of a windshield panel, having lens surfaces at a light-emitting side and a light-receiving side, a light-emitting element which emits light to the lens surface at the light-emitting side, and a light-receiving element which receives the light from the lens surface at the light-receiving side, comprising:
a prism including first and second lens surfaces on optical axes each differently directed at the light-emitting side and the light-receiving side;
the prism including a first reflection wall to reflect the light injecting the first lens surface at the light-emitting side toward a first detection surface of the windshield panel; and
the prism also including a second reflection wall which reflects the light injecting from the second lens surface at the light-emitting side to be reflected on a second detection surface on the windshield panel toward the second lens surface at the light-receiving side, wherein:
the light reflected on the first detection surface is condensed to inject the light-receiving element from the first lens surface at the light-receiving side; and
the light reflected on the second detection surface is condensed to inject the light-receiving element from the second lens surface at the light-receiving side through reflection on the second reflection wall.

2. The rain sensor according to claim 1, wherein:
each of the first and the second lens surfaces has a convex surface, and
each of the first and the second reflection walls has a flat surface.

3. The rain sensor according to claim 1 or 2, wherein:
the first lens surface at the light-emitting side and the second lens surface at the light-receiving side are disposed in an area other than a space between the light-emitting element and the light-receiving element, and
the second lens surface at the light-emitting side and the first lens surface at the light-receiving side are disposed in the area between the light-emitting element and the light-receiving element.
